# EUROPEAN PATENT APPLICATION

(11) **EP 4 603 941 A1**
(43) Date of publication of application: **20.08.2025**
(21) Application number: 23877360.0
(22) Date of filing: 13.10.2023
(51) Int. Cl.: G05D 1/43, G01C 21/34, G08G 1/09, G08G 1/13

(54) **MANAGEMENT DEVICE, MANAGEMENT METHOD, AND MANAGEMENT PROGRAM**

(30) Priority: 14.10.2022 JP 2022165912
(71) Applicant: NTT Communications Corporation, Tokyo 100-8019 (JP)
(72) Inventor: OKAHARA, Masayuki, Tokyo 100-8019 (JP); TAKI, Megumi, Tokyo 100-8019 (JP); TASHIRO, Takeharu, Tokyo 100-8019 (JP)
(74) Representative: Hoffmann Eitle
(86) International application number: PCT/JP2023/037177
(87) International publication number: WO 2024/080359

(57) **Abstract**

A management server (30) stores map information for each area where a robot, which autonomously travels outdoors and indoors, travels. The management server (30) collects external information, receives the current position of the robot or a travel route of the robot from a control device controlling the robot, detects an occurrence of an event and an event occurrence area where the event occurs based on the external information, identifies the robot located in the event occurrence area or the robot predicted to be located in the event occurrence area based on the current position of the robot or the travel route of the robot, determines, for each robot located in the event occurrence area or predicted to be located in the event occurrence area, information related to a new travel route based on the external information and the map information, and recommends the information related to a new travel route to a terminal device.

## Description

### [Technical Field]

The present invention relates to a management device, a management method, and a management program.

### [Background Art]

In recent years, autonomous mobile robots have been developed to address labor shortages. Autonomous mobile robots can travel indoors or outdoors to deliver goods, provide security, guide people, clean, transfer people, or the like.

The autonomous mobile robots are being considered for expanding their travel area to include not only the interior and surrounding areas of a single facility, but also the areas between and around multiple facilities and the traffic in and between multiple areas by remote control and simultaneous control of multiple robots.

Each robot travels autonomously, for example, with tasks and travel routes set by the respective robot operator, and its travel controlled by a robot provider's control server.

### [Citation List]

### [Non Patent Citation]

Patent Literature 1: Japanese Laid-open Patent Publication No. 2019-078618
Patent Literature 2: Japanese Laid-open Patent Publication No. 2019-079247

### [Summary of Invention]

### [Technical Problem]

When an event (e.g., all events that interfere or may interfere with the autonomous traveling of robots, which include area restrictions and traffic restrictions due to an event, weather changes such as guerrilla downpours, and so on; hereinafter simply referred to as "event") occurs or is predicted to occur in the area where robots are traveling, each robot operator needs to change the travel route of the corresponding robot traveling in the area where the event occurs, make a decision to cancel the travel, or change the timing of the travel (e.g., advancing or delaying the timing). In this case, for example, each robot operator needs to collect information about the event using external information or the like, and rewrite the travel route of the robot located in the event occurrence area to a new travel route (a travel route that avoids the occurring event, hereafter simply referred to as "new travel route") to make the robot avoid the event. On the other hand, when each robot operator determines that the robot is not affected by the occurrence of an event, the robot needs to operate normally (normal travel) without changing its travel route.

As the areas expand and the number of robots increases, and thus the number of areas and robots managed by the robot operators increases, the robot operator needs to quickly change the travel route of each robot when an event occurs. This may result in a very high processing burden on the robot operator when an event occurs, making it difficult to quickly change the robot's travel route.

In view of the above, it is an object of the present invention to provide a management device, a management method, and a management program that can provide information that enables understanding of the impact on a travel decision and a travel route of an autonomous mobile robot when an event occurs and is predicted to occur.

### [Solution to Problem]

In order to solve the above-described problems and achieve the object, a management device according to the present invention includes: a memory unit configured to store map information for each area where a robot, which autonomously travels outdoors and indoors, travels; a collection unit configured to collect external information; an acquisition unit configured to receive a current position of the robot or a travel route of the robot from a control device controlling the robot; a detection unit configured to detect an occurrence of an event and an event occurrence area where the event occurs, based on the external information; an identification unit configured to identify the robot located in the event occurrence area or the robot predicted to be located in the event occurrence area based on the current position of the robot or the travel route of the robot; a determination unit configured to determine information about a new travel route for each robot located in the event occurrence area or each robot predicted to be located in the event occurrence area based on the external information and the map information; and a recommendation unit configured to recommend information about the new travel route to a terminal device.

### [Advantageous Effects of Invention]

According to the present invention, it is possible to support the rapid change of travel routes of an autonomous mobile robot when an event occurs.

### [Brief Description of Drawings]

FIG. 1 illustrates a schematic of a management system in an embodiment.
FIG. 2 is a block diagram illustrating an example of a configuration of the management system in the embodiment.
FIG. 3 is a block diagram illustrating an example of a configuration of a control server illustrated in FIG. 2.
FIG. 4 is a block diagram illustrating an example of a configuration of a management server illustrated in FIG. 2.
FIG. 5 is a diagram illustrating an example of a map diagram of an area.
FIG. 6 is a diagram illustrating an example of a screen of the management server illustrated in FIG. 2 at the time of travel restriction due to accident occurrence.
FIG. 7 is a diagram illustrating an example of the screen of the management server illustrated in FIG. 2 at the time of travel restriction due to accident occurrence.
FIG. 8 is a diagram illustrating an example of the screen of the management server illustrated in FIG. 2 at the time of travel restriction due to accident occurrence.
FIG. 9 is a diagram illustrating an example of the screen of the management server illustrated in FIG. 2 at the time of travel restriction due to accident occurrence.
FIG. 10 is a diagram illustrating an example of the screen of the management server illustrated in FIG. 2 at the time of travel restriction due to a weather forecast.
FIG. 11 is a diagram illustrating an example of the screen of the management server illustrated in FIG. 2 at the time of travel restriction due to a weather forecast.
FIG. 12 is a diagram illustrating an example of the screen of the management server illustrated in FIG. 2 at the time of travel restriction due to a weather forecast.
FIG. 13 is a diagram illustrating an example of the screen of the management server illustrated in FIG. 2 at the time of travel restriction due to a weather forecast.
FIG. 14 is a diagram illustrating an example of the screen of the management server illustrated in FIG. 2 when the travel restriction due to a weather forecast is lifted.
FIG. 15 is a diagram illustrating an example of the screen of the management server illustrated in FIG. 2 when the travel restriction due to a weather forecast is lifted.
FIG. 16 is a sequence diagram illustrating a processing procedure of a management method according to an embodiment.
FIG. 17 is a diagram illustrating a computer executing a computer program.

### [Embodiments for Carrying Out the Invention]

The following is a detailed description of embodiments of a management device, a management method, and a management program according to the present application with reference to the drawings. The management device, the management method, and the management program according to the present application are not limited by these embodiments.

### Embodiments

In the following embodiments, a management device and a processing flow of a management method according to the embodiments will be described in order, and effects of the embodiments will be explained at the end.

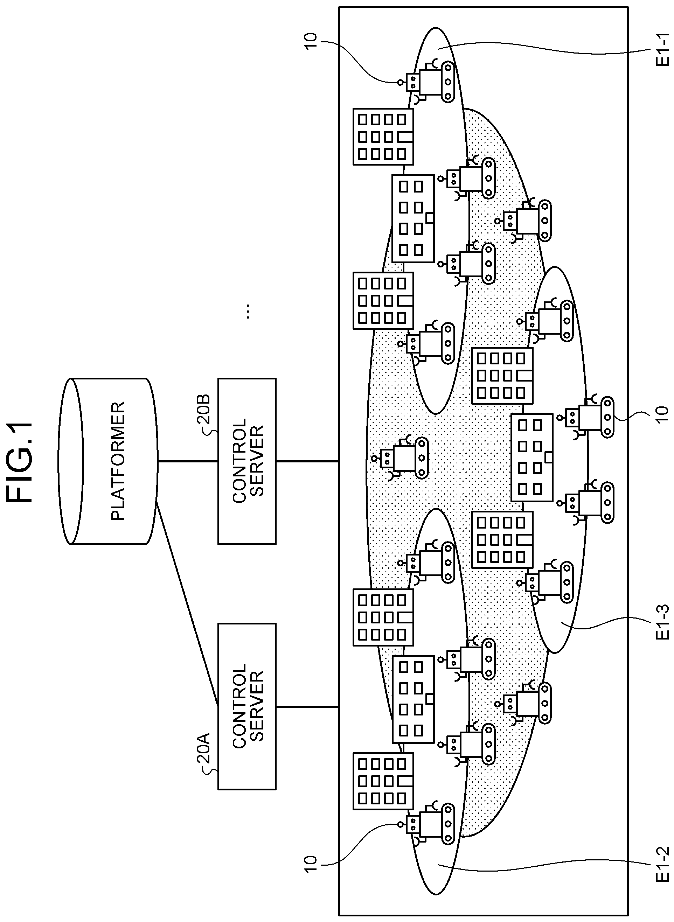

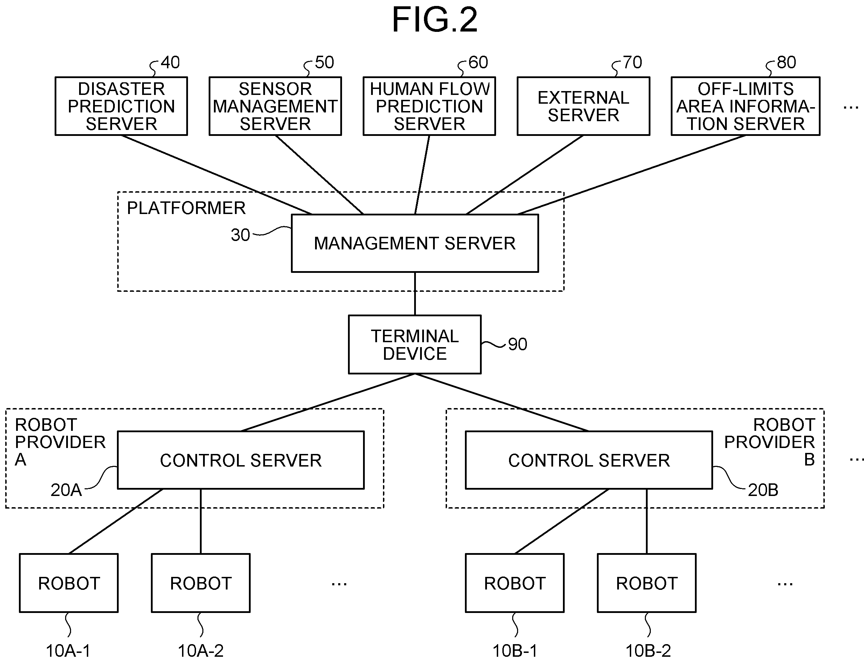

FIG. 1 illustrates a schematic of a management system in the embodiment. FIG. 2 is a block diagram illustrating an example of a configuration of the management system in the embodiment.

As illustrated in FIGS. 1 and 2, the management system in the embodiment includes control servers 20A and 20B (control devices) that control robots 10A-1, 10A-2, 10B-1, and 10B-2, which travel autonomously outdoors and indoors, and a management server 30 (management device) that provides information on robot control.

In the management system in the embodiment, a plurality of the control servers 20A and 20B use wireless communication or the like to control autonomous mobile robots 10A-1, 10A-2, 10B-1, and 10B-2 by using wireless communication or the like.

The configuration illustrated in FIGS. 1 and 2 is only one example, and the specific configuration and the number of devices are not limited. When referring to the robots 10A-1, 10A-2, 10B-1, and 10B-2 collectively, they are described as robots 10. When referring to the robots 10A-1 and 10A-2 collectively, they are described as robots 10A. When referring to the robots 10B-1 and 10B-2 collectively, they are described as robots 10B. When referring to the control servers 20A and 20B collectively, they are described as control servers 20.

The control server 20A controls the autonomous traveling of the robots 10A according to a robot control system of a robot provider A. The control server 20B controls the autonomous traveling of the robots 10B according to a robot control system of a robot provider B. The control server 20 sets a task and a travel route for each of the robots 10 to be controlled, for example, via robot operator's operation. As the aforementioned robot operator's operation, the robot operator (human) sets the task and the travel route for each of the robots 10 to be controlled by operating a terminal device or other device.

The robots 10 travel to and from a plurality of areas E1-1 to E1-3, including areas between and around a plurality of facilities, and between the areas E1-1 to E1-3, according to the control of the control servers 20, and perform tasks such as goods delivery, security, guiding, cleaning, transferring people, and other tasks.

Each of the robots 10, for example, has a communication unit that communicates with the corresponding control server 20 and a traveling function that enables autonomous traveling. The robot 10 also has various sensors that detect obstacles around it, and input/output units such as a touch panel, a microphone, and a speaker that receive operation input from a user and output audio or image information. The robot 10 may, for example, have an imaging device to capture images of the robot 10's surroundings. The robot 10 transmits the detection results by the sensors, images captured by the imaging device, and various information input by the user to the control server 20 via the communication unit.

The robot 10 travels according to the travel route set by the control server 20 and performs the task set by the control server 20. The current position of the robot 10 may be identifiable by the control server 20 using a positioning system such as a global positioning system (GPS).

The management server 30 of a platformer provides information on robot control to a terminal device 90. The management server 30 receives the current positions or travel routes of the robots 10 from the control servers 20. Each of the travel routes is also assigned a travel period for this travel route. The management server 30 may also receive from the control servers 20 various information transmitted from the robots 10 to the control servers 20.

The management server 30 then collects external information from various external servers to which the management server 30 connects via a communication network. The management server 30 provides information on robot control to the terminal device 90 based on the collected information.

External servers may include, for example, a disaster prediction server 40, a sensor management server 50, a human flow prediction server 60, an external server 70, and an off-limits area information server 80.

The disaster prediction server 40 is a server installed at a meteorological agency, a local government, or a private company, which predicts the occurrence of earthquakes, tsunamis, tornadoes, and eruptions, and publishes special warnings, warnings, advisories, and disaster prevention information. The disaster prediction server 40 also predicts and publishes information on the probability of precipitation and the occurrence of guerrilla downpours in the areas based on meteorological information (e.g., precipitation probability, record-setting short-time heavy rainfall information, etc.) published by the meteorological agency and other organizations.

The sensor management server 50 manages the detection operations of the various sensors installed in the robot travel area and collects the detection results from the various sensors. The various sensors include security cameras, motion sensors, and temperature sensors installed in various locations.

The human flow prediction server 60 predicts the human flow in a prediction target area during a prediction target period based on mobile data, images from security cameras, transportation usage information, and detection results from sensors (e.g., human detection sensors).

The external server 70 is a server that publishes news articles, blog articles, social networking service (SNS) articles, or the like.

The off-limits area information server 80 is a server that predicts and publishes the occurrence of an area that is off-limits to robots based on event information, accident occurrence information, construction information, traffic restriction information, or the like in the relevant area published by administrative offices, facility managers, event operators, or the like. The off-limits area information server 80 may use other information, not limited to the aforementioned information, to predict off-limits areas.

The management server 30 collects external information from various external servers, and when it detects the occurrence of an event, it recommends a new travel route for the robot 10 located in the event occurrence area to the terminal device 90. Instead of a new travel route, the management server 30 may recommend an off-limits area or the like to the terminal device 90. Note that the provided terminal device 90 outputs information transmitted from the management server 30 and receives operations on the management server 30, and can implement an instruction to the control server 20 to change the travel route of the robot 10. A plurality of the terminal devices 90 may be installed for respective robot providers.

The control server 20 sets a new travel route or the like for each robot based on information input from the terminal device 90 operated by the robot operator. For example, the robot operator changes the travel routes of the robots 10 by rewriting the travel routes to new travel routes recommended by the management server 30. In this way, the management server 30 supports quick change of travel routes of an autonomous mobile robot when an event occurs. The terminal device 90 operated by the robot operator may be provided as an independent terminal device for each robot provider.

### Control server

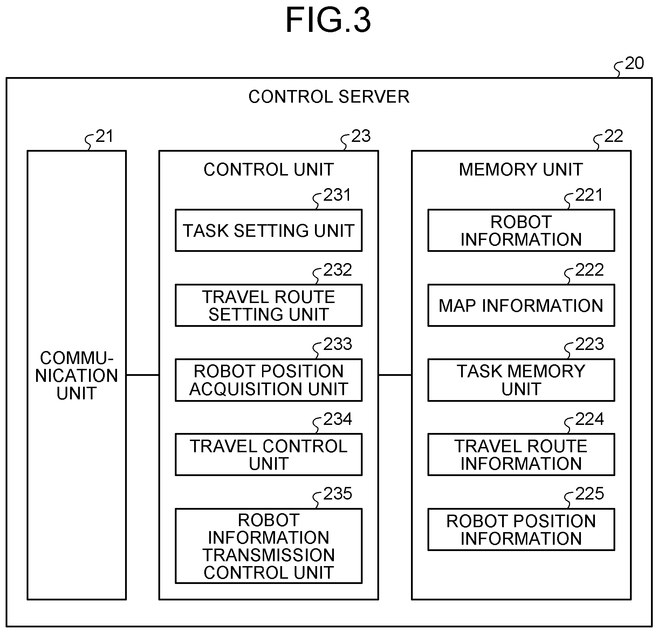

The control server 20 is described below. FIG. 3 is a block diagram illustrating an example of a configuration of the control server 20 illustrated in FIG. 2. As illustrated in FIG. 3, the control server 20 may include a communication unit 21, a memory unit 22, and a control unit 23. The control server 20 may be connected to input devices such as a mouse and a keyboard, and output devices such as a display and a speaker.

The communication unit 21 may control communication regarding various types of information. For example, the communication unit 21 may control communication with each of the robots 10 and communication with the management server 30. The communication unit 21 may transmit task and travel route setting instructions and travel control information to the robot 10 to control the travel and task execution of the robot 10. The communication unit 21 may also receive information acquired by the robot 10. The communication unit 21 may transmit the current position of the robot 10 or the travel route of the robot 10 to the management server 30.

The memory unit 22 may store data and a computer program necessary for various processing by the control unit 23. For example, the memory unit 22 may be a semiconductor memory element such as a random access memory (RAM) and a flash memory, or a storage device such as a hard disk and an optical disk. The memory unit 22 may include robot information 221, map information 222, a task memory unit 223, travel route information 224, and robot position information 225.

The robot information 221 may be information that includes the identification information, type, and executable tasks of each robot controlled by the control server 20.

The map information 222 may be map information for each area where the robot autonomously travels outdoors and indoors, which is stored by the memory unit 22. For example, the map information 222 is map information that includes a map of the areas E1-1 to E1-3 and a map of traffic between the areas E1-1 to E1-3. The map information 222 may be acquired in advance and updated as needed based on various sensor information, information transmitted from the robot 10, or the like. For the map information 222, the facilities in the areas E1-1 to E1-3, robot 10 travelable areas in and around the facilities, and robot 10 travelable areas between the areas E1-1 to E1-3 may be superimposed on the map. The robot 10 may be capable of traveling outdoors and indoors.

The task memory unit 223 may store historical information on tasks executed by each robot 10. A task that is being executed by each robot 10 may also be registered in the task memory unit 223 by a task setting unit 231 (to be described below). Tasks include goods delivery, security, guiding, cleaning, transferring people, and other tasks. The task memory unit 223 may store identification information of the robot 10, task identification information, a task execution period, or the like.

The travel route information 224 may be information indicating a travel route of the robot 10. A plurality of representative routes may be preset for travel routes, for example, depending on the area, task, and/or type of robot 10, and may be modified or added as appropriate depending on the traveling conditions. A travel route for each robot 10 set by a travel route setting unit 232 (to be described below) may also be registered in the travel route information 224.

The robot position information 225 may be information associated with the identification information of the robot 10, and the position and the position detection time of the robot 10.

The control unit 23 includes an internal memory for storing a computer program that specify various processing procedures or the like, and requested data, and may perform various processing with the computer program and the data. Here, the control unit 23 may be an electronic circuit such as a central processing unit (CPU) and a micro processing unit (MPU), or an integrated circuit such as an application specific integrated circuit (ASIC) and a field programmable gate array (FPGA).

The control unit 23 may include the task setting unit 231, the travel route setting unit 232, a robot position acquisition unit 233, a travel control unit 234, and a robot information transmission control unit 235.

For example, when the task setting unit 231 receives a request for service provision from a user, it may set a task to be executed and select a robot 10 to execute this task.

The travel route setting unit 232 may set a travel route for the robot 10 selected by the task setting unit 231 according to the task. The travel route setting unit 232 may select one of preset routes as the travel route in response to the robot operator's operation. Alternatively, the travel route setting unit 232 may set a route that is a modified version of a preset route in response to the robot operator's operation.

The robot position acquisition unit 233 may acquire the current position of each robot 10 to be controlled using a positioning system such as a GPS. The robot position acquisition unit 233 may associate the identification information of the robot 10 with the position and position detection time of the robot 10 and store them in the memory unit 22.

The travel control unit 234 may control the traveling of the robot 10 to be controlled, thereby causing the robot 10 to travel according to the travel route set by the travel route setting unit 232.

The robot information transmission control unit 235 may transmit information about each robot 10 to be controlled to the management server 30 via the communication unit 21. The robot information transmission control unit 235 may transmit, along with the identification information of each robot 10 to be controlled, the current position of the robot 10 or the travel route of the robot 10 to the management server 30. The robot information transmission control unit 235 may transmit both the current position of each robot 10 to be controlled and the travel route of each robot 10 to the management server 30. The robot information transmission control unit 235 may transmit the task of the robot 10 to be controlled and information received from the robot 10 to the management server 30.

### Management server

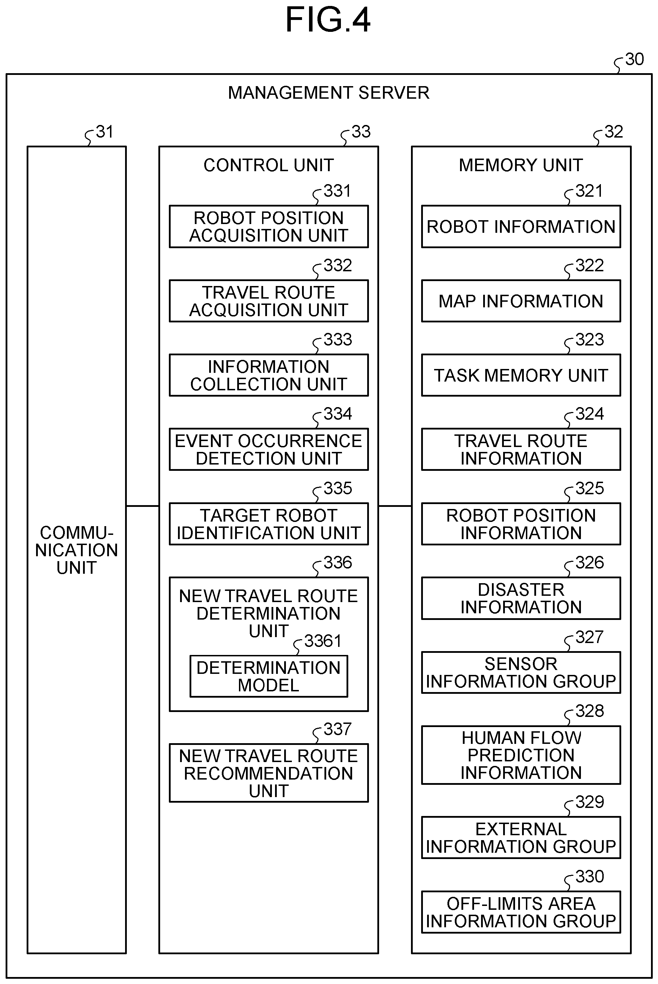

Next, the management server 30 illustrated in FIG. 2 will be described. FIG. 4 is a block diagram illustrating an example of a configuration of the management server 30 illustrated in FIG. 2. As illustrated in FIG. 4, the management server 30 includes a communication unit 31, a memory unit 32, and a control unit 33. The management server 30 is connected to input devices such as a mouse and a keyboard, and output devices such as a display and a speaker.

The communication unit 31 controls communication regarding various types of information. For example, the communication unit 31 controls communication with each external server and communication with the management server 30. The communication unit 31 receives from the control server 20 the current position of the robot 10 to be controlled or the travel route of the robot 10. The communication unit 31 also receives information acquired by the robot 10 to be controlled from the control server 20. The communication unit 31 also receives external information, which is information for predicting and estimating the occurrence of an event, from an external server.

The memory unit 32 stores data and a computer program necessary for various processing by the control unit 33. For example, the memory unit 32 is a semiconductor memory element such as a RAM and a flash memory, or a storage device such as a hard disk and an optical disk. The memory unit 32 includes robot information 321, map information 322, a task memory unit 323, travel route information 324, robot position information 325, disaster information 326, a sensor information group 327, human flow prediction information 328, an external information group 329, and an off-limits area information group 330.

The robot information 321 is information registered by associating the identification information of the control server 20 with the identification information of each robot controlled by the control server 20. When the type and executable task of the robot 10 are provided by the control server 20, the robot information 321 is registered with the type and executable task of the robot 10 in association with the identification information of the robot 10.

The map information 322 is map information that includes a map of the areas E1-1 to E1-3 and a map of traffic between the areas E1-1 to E1-3. For the map information 322, the facilities in the areas E1-1 to E1-3, robot 10 travelable areas in and around the facilities, and robot 10 travelable areas between the areas E1-1 to E1-3 are superimposed on the map. The map information 322 is provided, for example, by the control server 20.

When information on the task of the robot 10 is provided by the control server 20, the task memory unit 323 stores the task, the task execution period, and the like in association with the identification information of the robot 10.

The travel route information 324 is information provided by the control server 20 that indicates the travel route of the robot 10. The travel route information 324 corresponds to the identification information of the robot 10 and the travel route of the robot 10. The travel route is also assigned a travel period for this travel route.

The robot position information 325 is information provided by the control server 20 that indicates the current position of the robot 10. The robot position information 325 is associated with the identification information of the robot 10, the position of the robot 10, and the position detection time.

The disaster information 326 is, for example, special warnings, warnings, advisories, and disaster prevention information for disasters, including the type of disaster that is predicted to occur, the degree of disaster, the time of occurrence, and the duration of the disaster. Furthermore, the disaster Information 326 includes information on precipitation probability and the occurrence of guerrilla downpours in the relevant area. The disaster information 326 is contained, for example, in information received from the disaster prediction server 40.

The sensor information group 327 is an information group received from the sensor management server 50 that indicates the detection results of various sensors installed in the robot travel areas. The sensor information group 327 is, for example, an image captured by a security camera, a sensing result by a human sensor, a detected temperature by a temperature sensor, and the like.

The human flow prediction information 328 is information indicating the human flow in the prediction target area during the prediction target period, as predicted by the human flow prediction server 60. When the management server 30 receives information about an event (e.g., the holding of an event), the human flow prediction information 328 acquires the human flow prediction information in the event occurrence area during the event occurrence period by means of a prediction request by the management server 30 to the human flow prediction server 60.

The external information group 329 is information about various articles and smart cities published and released by the external server 70. These pieces of information may allow for the sequential recognition of the occurrence status of events, which is held by administrative offices or local governments.

The off-limits area information group 330 is information predicted and published by the off-limits area information server 80, and is included in event information, accident occurrence information, construction information, traffic restriction information, or the like in the relevant area published by administrative offices, facility managers, event operators, or the like.

The control unit 33 includes an internal memory for storing a computer program that specify various processing procedures or the like, and requested data, and performs various processing with the computer program and the data. Here, the control unit 33 is an electronic circuit such as a CPU and MPU, or an integrated circuit such as an ASIC and FPGA.

The control unit 33 includes a robot position acquisition unit 331 (acquisition unit), a travel route acquisition unit 332 (acquisition unit), an information collection unit 333 (collection unit), an event occurrence detection unit 334 (detection unit), a target robot identification unit 335 (identification unit), a new travel route determination unit 336 (determination unit), and a new travel route recommendation unit 337 (recommendation unit).

The robot position acquisition unit 331 may receive the identification information of the robot and the current position of the robot 10 from the control server 20, which is the control device controlling the robot 10. The robot position acquisition unit 331 registers the acquired current position of the robot 10 in the robot position information 325.

The travel route acquisition unit 332 may receive the identification information of the robot and the travel route of the robot 10 from the control server 20, which is the control device controlling the robot 10. The travel route acquisition unit 332 registers the acquired travel route of the robot 10 in the travel route information 324.

The information collection unit 333 collects various types of external information. The information collection unit 333 collects, as external information, special warnings, warnings, advisories, and disaster prevention information for disasters, and information about weather received from the disaster prediction server 40; detection results of various sensors installed in the robot travel areas received from the sensor management server 50; human flow prediction information in an event occurrence area predicted by the human flow prediction server 60; various articles published by the external server 70; event information, accident occurrence information, construction information, traffic restriction information, or the like in the relevant area published by event operators or the like, which is published by the off-limits area information server 80.

The information collection unit 333 may collect an image taken by the robot 10 and a detection result detected by a sensor of the robot 10 to determine whether the area around the robot 10 is travelable or not.

The event occurrence detection unit 334 determines, based on external information, whether an event has occurred or is predicted to occur. Based on the external information, the event occurrence detection unit 334 detects the occurrence of an event, the event occurrence area where the event occurs, and the event occurrence period during which the event is predicted to occur. The event occurrence detection unit 334 may identify the occurrence of an event and the event occurrence area based on: special warnings, warnings, advisories, and disaster prevention information for disasters, and information about weather received from the disaster prediction server 40; detection results of various sensors installed in the robot travel areas received from the sensor management server 50; human flow prediction information in an event occurrence area predicted by the human flow prediction server 60; various articles published by the external server 70; event information, accident occurrence information, construction information, traffic restriction information, or the like in the relevant area published by event operators or the like, which is published by the off-limits area information server 80.

The target robot identification unit 335 identifies the robot 10 located in an event occurrence area as the robot subject to travel route change, based on the current position of the robot 10 or the travel route of the robot 10. The target robot identification unit 335 identifies the robot 10 currently located in the event occurrence area detected by the event occurrence detection unit 334 or the robot 10 predicted to be located in the event occurrence area, based on the current position of the robot 10 provided by the control server 20. The target robot identification unit 335 identifies the robot 10 that is currently traveling or is predicted to travel in the event occurrence area detected by the event occurrence detection unit 334, based on the travel route of the robot 10 provided by the control server 20.

Furthermore, when the robot 10 does not retain information about the travel route, the target robot identification unit 335 identifies the robot located in the event occurrence area based on the current position of the robot. When the robot 10 retains information about the travel route, the target robot identification unit 335 identifies the robot 10 that retains the travel route included in the event occurrence area.

The new travel route determination unit 336 determines information about a new travel route for each robot 10 located in an event occurrence area or predicted to be located in an event occurrence area, based on the external information collected by the information collection unit 333 and the map information 322. Specifically, the external information includes a result of event occurrence prediction based on one or more of information about a disaster in each area, information acquired by the robot 10, information about human flow, information about weather, and information about traffic. The new travel route determination unit 336 determines information about a new travel route that avoids the event indicated by the result of the event occurrence prediction.

The new travel route determination unit 336 then determines new travel routes that differ among robots located or predicted to be located in the event occurrence area. The new travel route determination unit 336 may determine what new travel route to travel based on the task of the robot 10 and the type of robot 10. The new travel route determination unit 336 may, for example, determine a new travel route by assigning a shaded travel location to a robot 10 that has been set the task of delivering refrigerated or frozen goods.

Furthermore, the new travel route determination unit 336 determines a new travel route for the robot 10 by selecting or modifying one of the preset travel routes and setting the travel direction according to a preset determination rule.

Alternatively, the new travel route determination unit 336 may determine the new travel route using a determination model 3361 that determines a new travel route. The determination model 3361 is, for example, a model that has been trained to output a new travel route for each robot 10, using, as training data, various types of information such as map information of each area, positions of the robots 10, the number of robots 10, types of robots 10, predicted human flow information or human flow historical information, types and scales of events to occur, and event occurrence periods, and the like, and the new travel route for each condition.

The new travel route recommendation unit 337 recommends information on the new travel route determined by the new travel route determination unit 336 to the terminal device 90. For example, the new travel route recommendation unit 337 may transmit the robot 10 subject to travel route change and the new travel route for the robot 10 so that they are displayed on a system screen displayed on a terminal device or other device operated by a robot operator. Alternatively, the new travel route recommendation unit 337 may transmit, to the terminal device 90, visualization information including text recommending a change in travel route due to the occurrence of an event or other items and the new travel route for each robot 10 that are superimposed on the map of the event occurrence area. Furthermore, based on the recommended information, the robot operator may operate a terminal device or other device to change the travel route of the robot 10.

### Example of set route

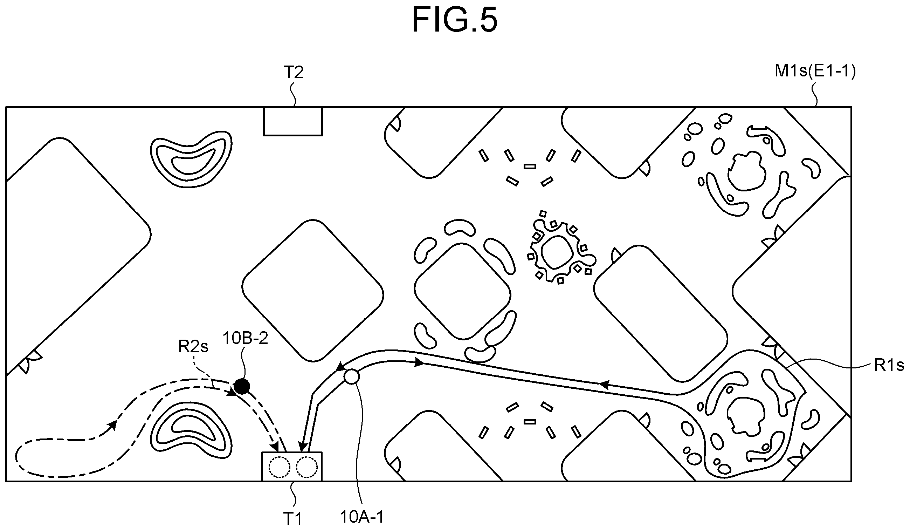

An example of a travel route of the robot 10 transmitted from the control server 20 will be described. In FIG. 5 and beyond, for example, the area E1-1 is explained among a plurality of areas. FIG. 5 is a diagram illustrating an example of a map diagram of the area E1-1.

As illustrated in a map M1s in FIG. 5, a plurality of facilities are provided in the area E1-1. The robots 10 can travel inside these facilities and outdoors including non-building areas around the facilities. In the area E1-1, two evacuation sites T1 and T2 may be set as evacuation sites for the robots 10, as illustrated in the map M1s. In addition to avoiding events by changing the travel routes, the robots 10 can also retreat to the evacuation sites T1 and T2. In both T1 and T2, two robots 10 can be evacuated.

For example, the management server 30 receives, from the control server 20, the travel routes and/or current positions of the two robots 10A-1 and 10B-2. For example, the travel route of robot 10A-1 is a travel route R1s and the travel route of the robot 10B-2 is a travel route R2s.

### Example of screen display

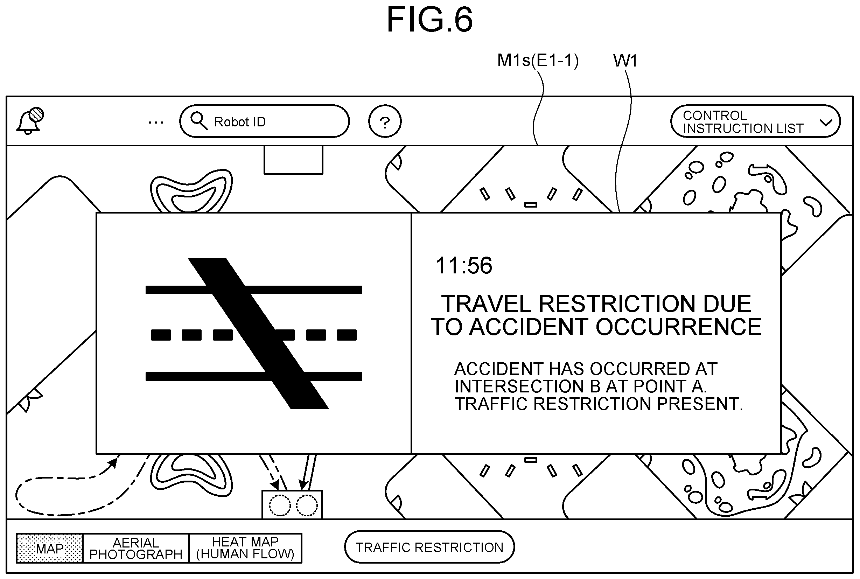

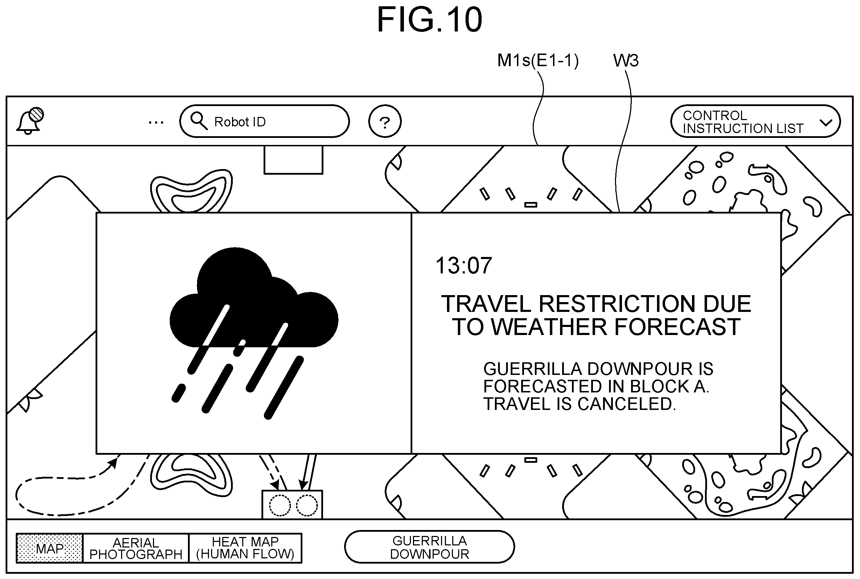

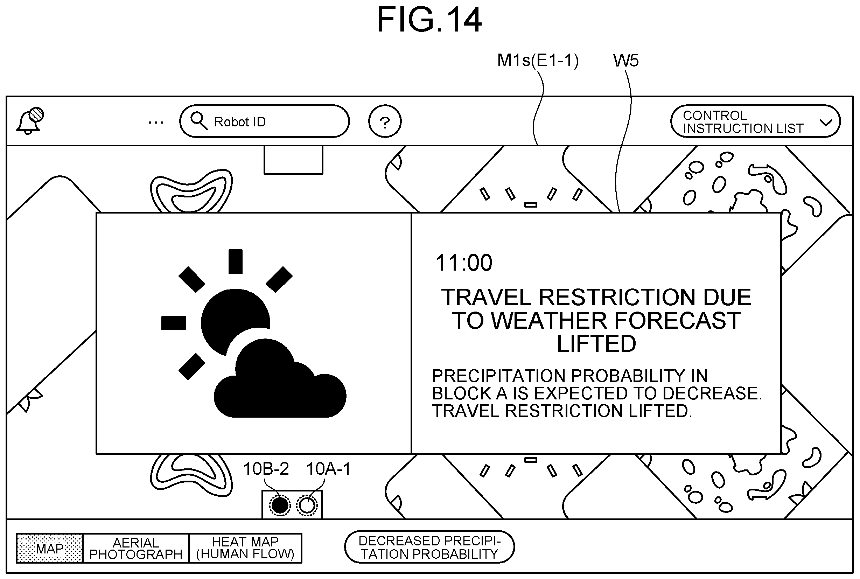

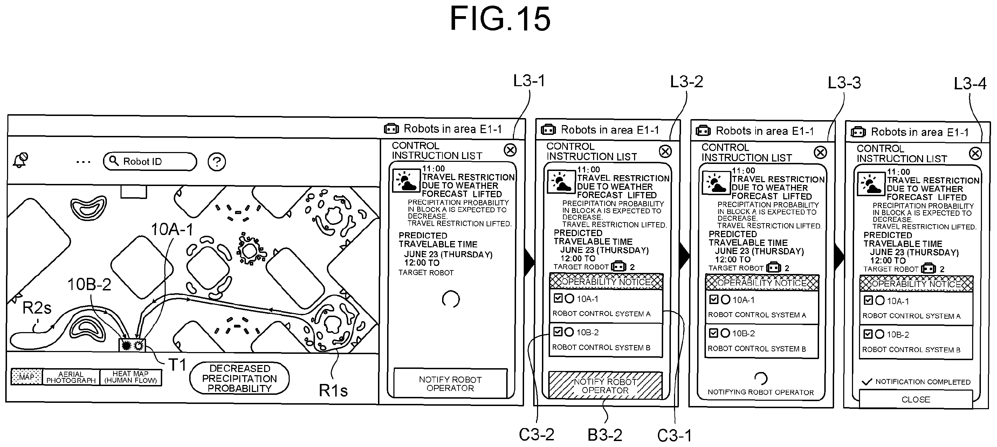

From here, an example of a screen display of the management server 30 when an event occurs in the area E1-1 will be described. FIGS. 6 through 15 illustrate examples of screens of the management server 30 illustrated in FIG. 2. In the following sections, FIGS. 6 through 9 illustrate the case of "travel restriction due to accident occurrence", FIGS. 10 through 13 illustrate the case of "travel restriction due to weather forecast", and FIGS. 14 and 15 illustrate "lifting of travel restriction due to weather forecast".

### Travel restriction due to accident occurrence

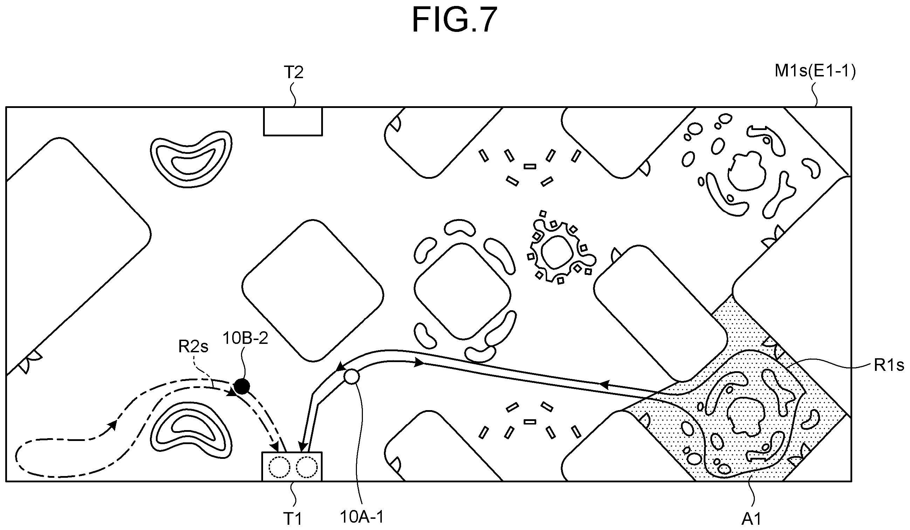

When the management server 30 detects, based on external information, that a travel restriction due to accident occurrence has occurred in the area E1-1, the management server 30 may indicate on the map M1s of the area E1-1 that the travel restriction due to accident occurrence has been published, as illustrated in FIG. 6 (for example, refer to a window W1 in FIG. 6). The location where the travel restriction occurs in this case is assumed to be a travel restriction area A1 in the area E1-1 illustrated in FIG. 7.

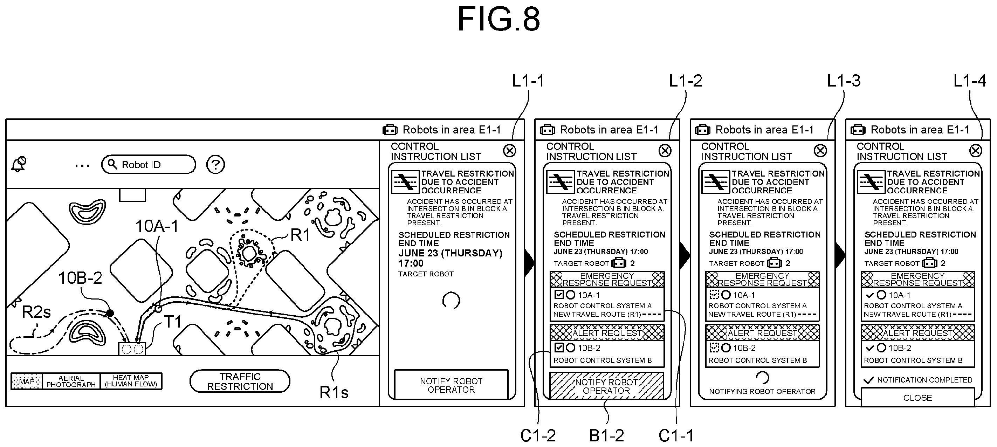

The management server 30 then indicates in a control instruction list L1-2 illustrated in FIG. 8 the robot 10 located in the area E1-1 during the period when the travel restriction is in effect as the robot 10 subject to travel route change. For example, as illustrated in columns C1-1 and C1-2 of the control instruction list L1-2, the robots 10A-1 and 10B-2 are indicated as the robots 10 located in the area E1-1.

When a button B1-2 to "Notify robot operator" is selected by an administrator of the management server 30, the management server 30 determines a new travel route R1 for the robot 10A-1. On the other hand, since the travel route of the robot 10B-2 does not involve the travel restriction area A1, the travel route R2s is determined as the set travel route. The management server 30 then recommends the new travel route R1 for the robot 10A-1 and alert information about the information on the travel restriction area A1 for the robot 10B-2 to the terminal device 90 (refer to control instruction lists L1-3 and L1-4). Based on the recommended information, the robot operator may then operate the terminal device or other device to change the travel route of the robot 10.

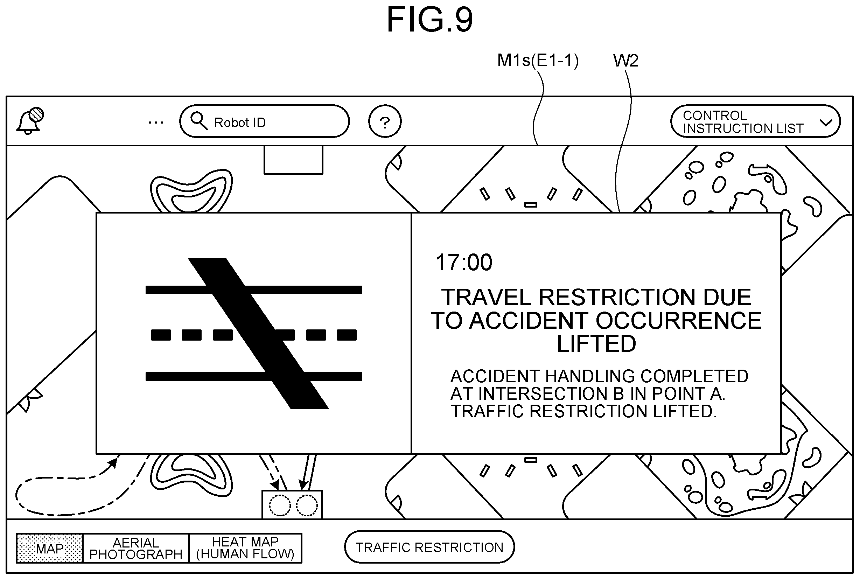

Then, when the management server 30 detects, based on the external information, that the accident has been processed and the travel restriction due to accident occurrence has been lifted, the management server 30 may indicate on the map M1s of the area E1-1 that the travel restriction due to accident occurrence has been lifted, as illustrated in FIG. 9 (for example, refer to a window W2 in FIG. 9).

### Travel restriction due to weather forecast

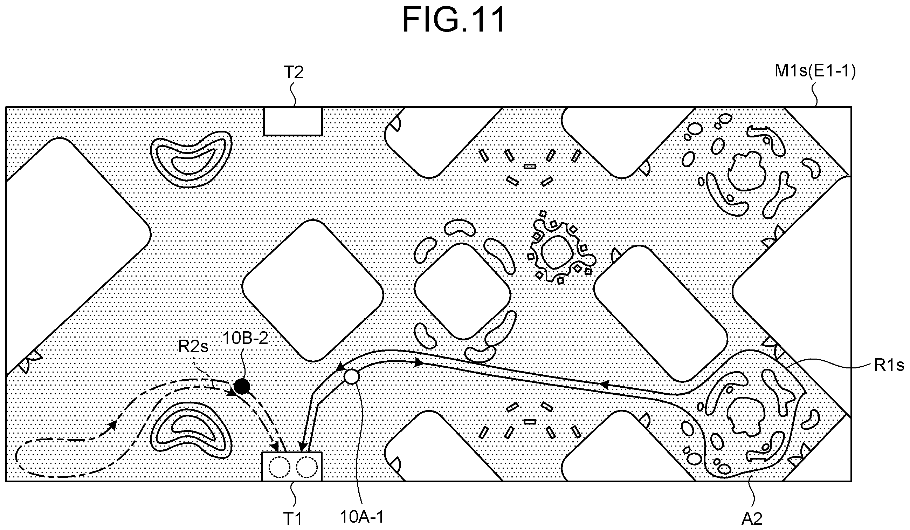

Next, when the management server 30 detects, based on external information, that a travel restriction due to weather forecast has occurred in the area E1-1, the management server 30 may indicate on the map M1s of the area E1-1 that the travel restriction due to weather forecast has been published, as illustrated in FIG. 10 (for example, refer to a window W3 in FIG. 10). In this case, it is assumed that the travel restriction occurs due to the occurrence of a guerrilla downpour as a weather phenomenon, and that the location where the travel restriction occurs is a travel restriction area A2 in the area E1-1 illustrated in FIG. 11.

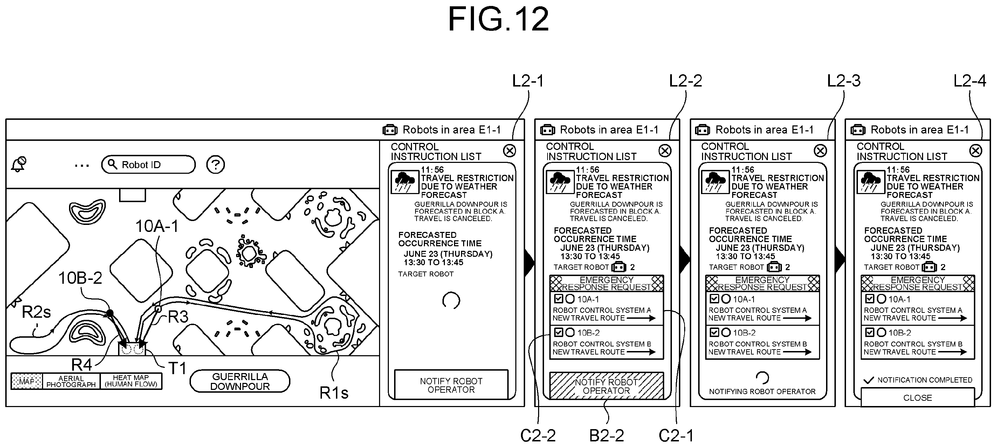

The management server 30 then indicates in a control instruction list L2-2 illustrated in FIG. 12 the robot 10 located in the area E1-1 during the period when the travel restriction is in effect as the robot 10 subject to travel route change. For example, as illustrated in columns C2-1 and C2-2 of the control instruction list L2-2, the robots 10A-1 and 10B-2 are indicated as the robots 10 located in the area E1-1.

When a button B2-2 to "Notify robot operator" is selected by the administrator of the management server 30, the management server 30 determines that, for the robots 10A-1 and 10B-2, the travel is cancelled due to the occurrence of a guerrilla downpour. Then, for the robots 10A-1 and 10B-2, the management server 30 recommends new travel routes R3 and R4 to the evacuation site T1 to the terminal device 90 (refer to control instruction lists L2-3 and L2-4). Instead of a new travel route to the evacuation site T1, the management server 30 may recommend to the terminal device 90 a new travel route to the evacuation site T2 or a new travel route outside the travel restriction area. Based on the recommended information, the robot operator may then operate the terminal device or other device to change the travel routes of the robots 10.

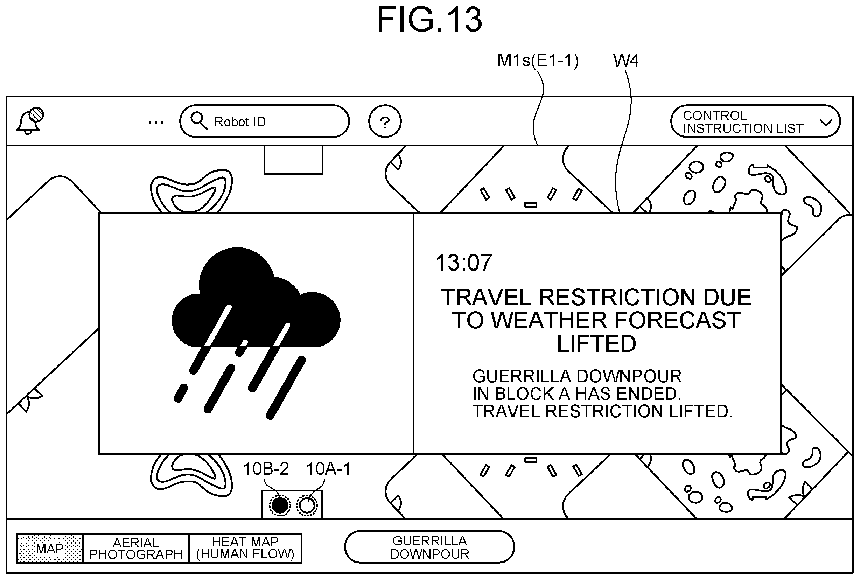

Then, when the management server 30 detects, based on external information, that the guerrilla downpour has ended and the travel restriction have been lifted, the management server 30 may indicate on the map M1s of the area E1-1 that the travel restriction due to weather forecast has been lifted, as illustrated in FIG. 13 (for example, refer to a window W4 in FIG. 13).

Lifting of travel restriction due to weather forecast

Next, when the management server 30 detects, based on external information, that the travel restriction has been lifted due to a decrease in precipitation probability in the area E1-1, as illustrated in FIG. 14, the management server 30 may indicate on the map M1s of the area E1-1 that the lifting of the travel restriction due to weather forecast (forecast of decreased precipitation probability) has been published (for example, refer to a window W5 in FIG. 14). The location where the travel restriction occurs in this case is assumed to be the same as the travel restriction area A2 in the area E1-1 illustrated in FIG. 11.

The management server 30 then indicates in a control instruction list L3-2 in FIG. 15 the robot 10 located in the area E1-1 at the timing when the travel restriction is lifted as the robot 10 subject to travel route change. For example, as illustrated in columns C3-1 and C3-2 of the control instruction list L3-2, the robots 10A-1 and 10B-2 are indicated as the robots 10 located in the area E1-1.

When a button B3-2 to "Notify robot operator" is selected by the administrator of the management server 30, the management server 30 determines that, for the robots 10A-1 and 10B-2, the travel restriction due to weather forecast (forecast of decreased precipitation probability) is lifted. The management server 30 then recommends to the terminal device 90 that, for the robots 10A-1 and 10B-2, the travel restriction has been lifted and operation is now possible (refer to control instruction lists L3-3 and L3-4). At this time, for the robots 10A-1 and 10B-2, the management server 30 may recommend, to the terminal device 90, new travel routes or existing travel routes (R1s and R2s) preset for the robots 10A-1 and 10B-2. Based on the recommended information, the robot operator may then operate the terminal device or other device to change the travel routes of the robots 10.

### Management processing

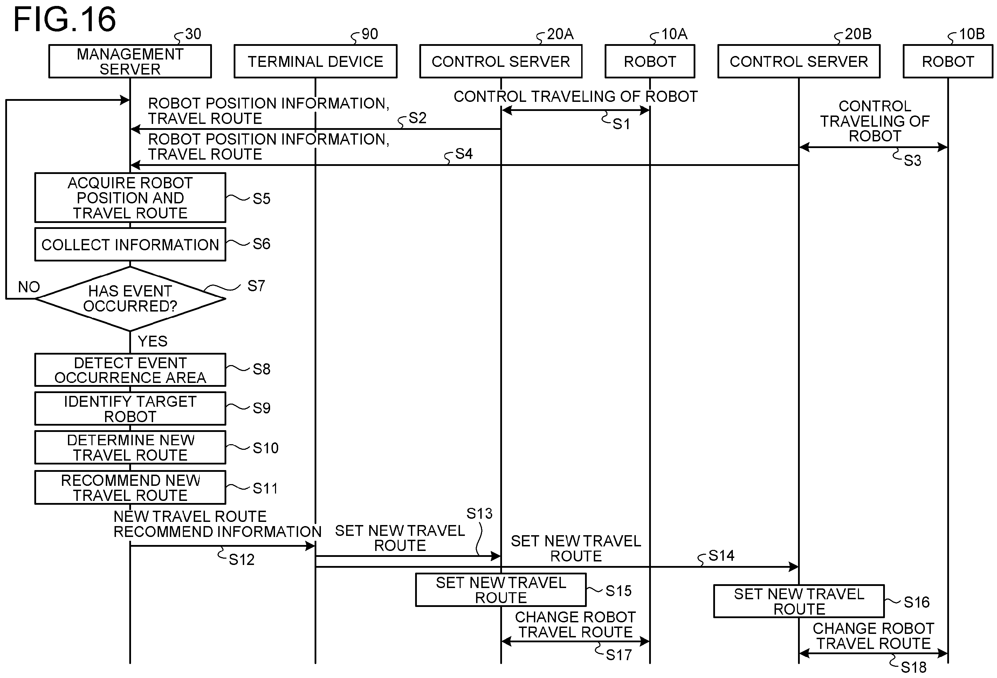

Next, management processing according to the embodiment will be explained. FIG. 16 is a sequence diagram illustrating a processing procedure of the management processing according to the embodiment.

As illustrated in FIG. 16, the control servers 20A and 20B set tasks and travel routes to the robots 10A and 10B and control autonomous traveling of the robots 10A and 10B by communicating with the robots 10A and 10B (steps S1 and S3).

By receiving the current positions or travel routes of the robots 10 from the respective control servers 20 (steps S2 and S4), the management server 30 acquires the current positions or travel routes of the robots 10 (step S5).

The management server 30 collects external information from an external server or other sources (step S6). The management server 30 then determines, based on the external information, whether an event is predicted to occur (step S7). The management server 30 returns to the beginning if an event is not predicted to occur (No at step S7).

If an event is predicted to occur (Yes at step S7), the management server 30 detects the event occurrence area where the event will occur and the event occurrence period during which the event is predicted to occur (step S8).

The management server 30 identifies the robot 10 that is located or predicted to be located in the event occurrence area based on the current position of the robot 10 or the travel route of the robot 10 (step S9).

Subsequently, the management server 30 determines a new travel route for each robot 10 located in the event occurrence area based on the external information collected by the information collection unit 333 and the map information 322 (step S10).

Then, the management server 30 recommends the information about each robot that is located or predicted to be located in the event occurrence area and the new travel route of each robot, as determined by the new travel route determination unit 336, to the terminal device 90, for example (steps S11 and S12). When the new travel route of each robot 10 located in the event occurrence area is set via the terminal device 90 operated by the robot operator (steps S13, S14, S15, and S16), the control servers 20A and 20B change the travel routes of the respective robots 10 located in the event occurrence area according to the set new travel routes (steps S17 and S18).

### Effects of embodiments

Thus, the terminal device 90 is provided by the management server 30 with information about event occurrence and information about the robot 10 located in an event occurrence area. This eliminates the need for the robot operator of the control server 20 to collect information about event occurrence, detect the occurrence of an event, and identify the robot 10 located in the event occurrence area.

Furthermore, the terminal device 90 receives a recommendation from the management server 30 for a new travel route for the robot 10 located in the event occurrence area. Therefore, when the robot operator of the control server 20 rewrites the travel route of the robot 10 to a new travel route, it is sufficient to set the new travel route based on the travel route recommended by the management server 30, instead of creating a new travel route from scratch.

Therefore, according to the embodiments, the processing burden of the robot operator until the travel route of the robot is changed is reduced, and the change of the travel route of the robot 10 when an event occurs can be executed quickly.

If a new travel route is set by each robot provider, there may be cases of collisions while traveling on new travel routes because the positions of robots controlled by other operators cannot be determined. In contrast, in the embodiments, the management server 30 collects information collectively, identifies each robot 10 located in the event occurrence area, regardless of which provider's robot 10, and recommends a new travel route suitable for each robot 10 to the terminal device 90.

Therefore, according to the embodiments, new travel route determination across areas and robot providers is possible even when many robots are introduced in a plurality of areas by a plurality of robot providers. Therefore, according to the embodiments, when an event occurs, quick and smooth change of a travel route for each robot 10 located in the event occurrence area can be supported.

### System configuration, etc.

In addition, each component of the devices illustrated in the drawings is a functional concept and does not necessarily have to be physically configured as illustrated in the drawings. In other words, the specific form of distribution and integration of the devices is not limited to that illustrated in the drawings, but can be configured by functionally or physically distributing and integrating all or some of them in optional units according to various loads and usage conditions. Furthermore, each processing function performed by the devices can be implemented, in whole or in part, by a CPU or graphics processing unit (GPU) and a program that is analyzed and executed by the CPU or GPU, or can be implemented as hardware using wired logic.

Of the various processing described in the present embodiment, all or part of the processing described as being performed automatically can be performed manually, or all or part of the processing described as being performed manually can be performed automatically by related methods. Other information including the processing procedures, control procedures, specific names, and various data and parameters illustrated in the above text and drawings may be changed as desired, unless otherwise noted.

### Computer program

It is also possible to create a computer program that describes the processing executed by the management server 30 described in the above embodiment in a language that can be executed by a computer. For example, a computer program can be created that describes the processing executed by the management server 30 in the embodiment in a language that can be executed by a computer. In this case, the same effects as in the above embodiment can be obtained by a computer executing the computer program. Furthermore, the same processing as the above embodiment may be realized by recording such a computer program on a computer-readable recording medium, and having a computer read and execute the computer program recorded on the recording medium.

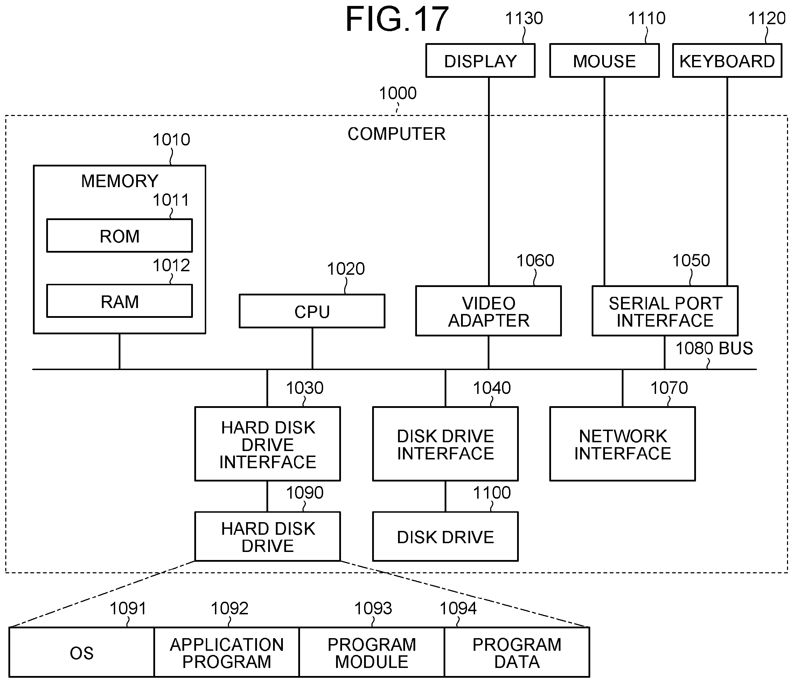

FIG. 17 is a diagram illustrating a computer executing a computer program. As illustrated in FIG. 17, a computer 1000 includes, for example, a memory 1010, a CPU 1020, a hard disk drive interface 1030, a disk drive interface 1040, a serial port interface 1050, a video adapter 1060, and a network interface 1070, and these parts are connected by a bus 1080.

The memory 1010 includes a read only memory (ROM) 1011 and a RAM 1012, as illustrated in FIG. 17. The ROM 1011 stores boot programs such as a basic input output system (BIOS) for example. The hard disk drive interface 1030 is connected to a hard disk drive 1090, as illustrated in FIG. 17. The disk drive interface 1040 is connected to a disk drive 1100. A removable storage medium, such as a magnetic or optical disk, for example, is inserted into the disk drive 1100. The serial port interface 1050 is connected to, for example, a mouse 1110 and a keyboard 1120. The video adapter 1060 is connected to a display 1130, for example.

Here, as illustrated in FIG. 17, the hard disk drive 1090 stores, for example, an operating system (OS) 1091, an application program 1092, a program module 1093, and program data 1094. That is, the above computer program is stored in the hard disk drive 1090, for example, as a program module describing instructions to be executed by the computer 1000.

The various data described in the above embodiment is stored as program data, for example, in the memory 1010 or the hard disk drive 1090. The CPU 1020 reads the program module 1093 and the program data 1094 stored in the memory 1010 and the hard disk drive 1090 to the RAM 1012 as needed and executes various processing procedures.

The program module 1093 and the program data 1094 pertaining to the computer program are not limited to being stored in the hard disk drive 1090, but, for example, may be stored in a removable storage medium, and read out by the CPU 1020 via a disk drive or the like. Alternatively, the program module 1093 and the program data 1094 pertaining to the computer program are stored in another computer connected via a network (local area network (LAN), wide area network (WAN), etc.) and may be read out by the CPU 1020 via the network interface 1070.

The above embodiment and modifications thereof are included within the scope of the claimed invention and its equivalents as well as within the technology disclosed by the present application.

### [Explanation of Reference]

10, 10A, 10B, 10A-1, 10A-2, 10B-1 to 10B-4 Robot 20, 20A, 20B Control server
30 Management server
40 Disaster prediction server
50 Sensor management server
60 Human flow prediction server
70 External server
80 Off-limits area information server
90 Terminal device
21, 31 Communication unit
22, 32 Memory unit
23, 33 Control unit
221, 321 Robot information
222, 322 Map information
223, 323 Task memory unit
224, 324 Travel route information
225, 325 Robot position information
231 Task setting unit
232 Travel route setting unit
233 Robot position acquisition unit
234 Travel control unit
235 Robot information transmission control unit
326 Disaster information
327 Sensor information group
328 Human flow prediction information
329 External information group
330 Off-limits area information group
331 Robot position acquisition unit
332 Travel route acquisition unit
333 Information collection unit
334 Event occurrence detection unit
335 Target robot identification unit
336 New travel route determination unit
337 New travel route recommendation unit
3361 Determination model

## Claims

1. A management device comprising:
a memory unit configured to store map information for each area where a robot, which autonomously travels outdoors and indoors, travels;
a collection unit configured to collect external information;
an acquisition unit configured to receive a current position of the robot or a travel route of the robot from a control device controlling the robot;
a detection unit configured to detect an occurrence of an event and an event occurrence area where the event occurs, based on the external information;
an identification unit configured to identify the robot located in the event occurrence area or the robot predicted to be located in the event occurrence area based on the current position of the robot or the travel route of the robot;
a determination unit configured to determine information about a new travel route for each robot located in the event occurrence area or each robot predicted to be located in the event occurrence area based on the external information and the map information; and
a recommendation unit configured to recommend information about the new travel route to a terminal device.

2. The management device according to claim 1,
wherein
when the robot does not retain information about the travel route, the identification unit identifies the robot located in the event occurrence area based on the current position, and
when the robot retains information about the travel route, the identification unit identifies the robot that retains the travel route included in the event occurrence area.

3. The management device according to claim 1,
wherein
the external information includes a result of event occurrence prediction based on one or more of information about a disaster in each area, information acquired by the robot, information about human flow, information about weather, and information about traffic, and
the determination unit determines information about the new travel route that avoids the event indicated by the result of the event occurrence prediction.

4. The management device according to claim 1,
wherein the determination unit determines information about new travel routes that differ among robots located in the event occurrence area.

5. A management method executed by a management device, the management method comprising:
a process of collecting external information;
a process of receiving a current position of a robot or a travel route of the robot from a control device controlling the robot;
a process of detecting an occurrence of an event and an event occurrence area where the event occurs based on the external information;
a process of identifying the robot located in the event occurrence area or the robot predicted to be located in the event occurrence area based on the current position of the robot or the travel route of the robot;
a process of determining information about a new travel route for each robot located in the event occurrence area or each robot predicted to be located in the event occurrence area based on the external information and the map information; and
a process of recommending information about the new travel route to a terminal device.

6. A management program executed by a management device, the management program comprising:
a step of collecting external information;
a step of receiving a current position of a robot or a travel route of the robot from a control device controlling the robot;
a step of detecting an occurrence of an event and an event occurrence area where the event occurs based on the external information;
a step of identifying the robot located in the event occurrence area or the robot predicted to be located in the event occurrence area based on the current position of the robot or the travel route of the robot;
a step of determining information about a new travel route for each robot located in the event occurrence area or each robot predicted to be located in the event occurrence area based on the external information and the map information; and
a step of recommending information about the new travel route to a terminal device.
